# FASCICULE DE BREVET EUROPEEN

(11) **EP 0 845 581 B1**
(45) Date de publication et mention de la délivrance du brevet: **13.03.2002**
(21) Numéro de dépôt: 97402852.4
(22) Date de dépôt: 27.11.1997
(51) Int. Cl.: F01D 25/24, B64D 29/06

(54) **Dispositif de liaison d'un inverseur de poussée à un turbomoteur**
Verbindungsvorrichtung für die Schubumkehrvorrichtung einer Turbomaschine
Latching apparatus for the thrust reverser of a turbo-engine

(30) Priorité: 28.11.1996 FR 9614564
(43) Date de publication de la demande: 03.06.1998
(73) Titulaire: HUREL-HISPANO LE HAVRE, 76700 Harfleur (FR)
(72) Inventeur: Carimali, Félix, 76600 - Le Havre (FR); Hogie, Jean-Paul René André, 76600 - Le Havre (FR); Lore, Xavier Raymond Yves, 76210 - Beuzeville La Grenier (FR); Rouyer, Pascal Gérard, 76430 - Saint Aubin Routot (FR)
(74) Mandataire: Berrou, Paul

(56) Documents cités:
- GB-A- 2 267 122
- GB-A- 2 288 578
- US-A- 3 061 349
- US-A- 4 365 775
- US-A- 4 549 708
- US-A- 4 613 099
- US-A- 4 679 750

## Description

L'invention se rapporte aux inverseurs de poussée pour aéronefs à propulsion par turbomoteur du type turbofan à double flux, et plus particulièrement à la liaison entre ledit inverseur de poussée et ledit turbomoteur.

Un groupe propulseur pour aéronef comporte un turbomoteur entouré d'une nacelle, le tout relié par un mât à la structure de l'aéronef. La nacelle a une forme générale sensiblement de révolution autour de l'axe géométrique du turbomoteur. La nacelle est elle-même composée de plusieurs ensembles fonctionnels dont notamment un inverseur de poussée situé au milieu et à l'arrière du turbomoteur. Pour des raisons évidentes d'aérodynamisme et de légèreté, les ensembles constituant la nacelle sont des structures minces en tôle et sont en conséquence relativement déformables malgré la présence de raidisseurs.

Afin de faciliter l'accès au turbomoteur et aux organes mécaniques de l'inverseur, et aussi afin de faciliter la dépose du turbomoteur, les ensembles fonctionnels constituant la nacelle en général, et l'inverseur en particulier, sont agencés en demi-coquilles articulées par une extrémité au mât par des charnières approximativement parallèles à l'axe géométrique du turbomoteur, les demi-coquilles étant verrouillées entre elles en position fermée par leur extrémité libre.

Pour freiner l'aéronef en vol, l'inverseur de poussée dévie temporairement vers l'amont du turbomoteur le flux d'air propulsif, et se trouve de ce fait soumis à une force de réaction très importante d'avant en arrière et parallèlement à l'axe géométrique du turbomoteur. Afin de décharger de cette force de réaction les charnières liant les demi-coquilles de l'inverseur au mât, et afin aussi de décharger les demi-coquilles de contraintes tendant à provoquer le flambage des tôles, ces demi coquilles sont aussi liées en position fermée au carter extérieur du turbomoteur par interpénétration de deux éléments de liaison annulaires suivant un mouvement sensiblement dans un plan perpendiculaire à l'axe géométrique du turbomoteur, avec pivotement selon les axes géométriques des charnières, l'un des éléments de liaison étant intérieur fixe et solidaire du carter extérieur du turbomoteur, et l'autre étant extérieur mobile et solidaire de chacune des demi-coquilles de l'inverseur. L'élément de liaison fixe peut être une rainure annulaire, par exemple en U ou en V, dont l'ouverture est tournée radialement vers l'extérieur, alors que l'élément de liaison mobile est constitué de deux couteaux solidaires chacun d'une demi-coquille de l'inverseur, ces couteaux étant de forme complémentaire à la rainure et venant s'engager dans ladite rainure lorsque les demi-coquilles de l'inverseur sont en position fermée. On notera que la rainure peut être aussi disposée sur l'élément de liaison mobile et le couteau sur l'élément de liaison fixe. On comprend qu'avec cette disposition la force de réaction axiale est régulièrement répartie sur la quasi totalité de la circonférence du carter extérieur et des demi-coquilles de l'inverseur. On comprend aussi que cette disposition assure le centrage mutuel du turbomoteur et de l'inverseur. Ce type de dispositif est décrit dans le document GB-A-2 288 578.

La déformation des demi-coquilles de l'inverseur ou de tout élément participant à leur rigidité, sous l'effet notamment de sollicitations radiales centrifuges, peut entrainer le désengagement des couteaux par rapport à la rainure et entrainer de ce fait la séparation de l'inverseur et du turbomoteur. Un défaut d'équilibrage dynamique du turbomoteur, provenant par exemple de la rupture accidentelle d'une aube, peut également provoquer ce désengagement. Le problème est en conséquence d'empêcher le désengagement couteaux-rainure :
- sans gêner l'ouverture volontaire des demi-coquilles de l'inverseur,
- sans alourdir sensiblement le groupe propulseur.

Pour résoudre ce problème, l'invention propose un dispositif de liaison d'un inverseur de poussée à un turbomoteur du type précédemment décrit et remarquable en ce qu'il comporte les moyens suivants :
a) des surfaces de verrouillage, ou portées, tournées radialement vers l'extérieur sont disposées sur les éléments de liaison extérieurs,
b) une pluralité de pênes de verrouillage sont disposés sur le carter extérieur du turbomoteur au voisinage des éléments de liaison fixes et comportent deux positions:
   - une position fermée dans laquelle les pênes arrivent au-dessus de la portée, avec un jeu limité,
   - une position ouverte dans laquelle les pênes n'arrivent pas au-dessus de la portée,
le déplacement de chaque pêne s'effectuant sensiblement dans un plan perpendiculaire à une droite géométrique radiale à l'axe géométrique du turbomoteur, ladite droite géométrique passant par ladite portée à l'endroit où elle est recouvrable par le pêne.

Avantageusement, des moyens de commande déplaçent ensemble les pênes de verrouillage entre la position ouverte et la position fermée.

Les pênes arrivant au-dessus de la portée extérieure avec un jeu limité, on comprend que ces pênes ont pour effet d'empêcher localement les éléments de liaison extérieurs de s'éloigner radialementdes éléments de liaison intérieurs, et pour résultat celui d'empêcher la désolidarisation desdits éléments de liaison sous l'effet notamment des sollicitations radiales centrifuges naissant dans les demi-coquilles de l'inverseur.

On comprend aussi que cette solidarisation des demi-coquilles de l'inverseur avec le carter extérieur permet de compenser la rigidité limitée de ces demi-coquilles. Cet effet est amélioré par une répartition régulière des pênes de verrouillage avec une densité linéaire suffisante le long de la circonférence du carter extérieur. Ceci permet :
- soit d'exploiter l'inverseur avec des sollicitations plus importantes,
- soit de réduire la résistance et la rigidité intrinsèque de l'inverseur, et en conséquence sa masse.

On comprend aussi que les moyens de commande permettent de mettre rapidement en position "ouverte" les pênes de verrouillage, la présente invention ne gênant pas en conséquence l'ouverture volontaire des demi-coquilles de l'inverseur.

Avantageusement, les pênes de verrouillage seront poussés en position "fermée" par des ressorts avec une force suffisante pour vaincre les forces parasites siégeant dans les moyens de commande. Une telle disposition permet simultanément :
- d'empêcher le passage intempestif des pênes depuis la positon "fermée" vers la position "ouverte", par exemple sous l'effet des vibrations siégeant dans la nacelle ;
- de prévenir un oubli de remise des pênes en position "fermée" après la fermeture des coquilles de l'inverseur.

Dans un premier mode de réalisation de l'invention, les pênes sont montés pivotants sur des axes d'articulation radiaux et comportent chacun un levier de commande dont l'extrémité libre est raccordée à un câble ou un secteur de couronne relié lui-même à un levier de commande. Les pênes sont ramenés automatiquement en position fermée chacun par un ressort hélicoïdal disposé concentriquement à l'axe d'articulation.

Dans un mode de réalisation préféré car plus économique, les pênes coulissent dans une rainure annulaire suivant un mouvement de translation et sont actionnés chacun par une came linéaire disposée dans la rainure annulaire,ladite came étant elle-même actionnée en translation par un levier.

Dans un autre mode de réalisation de l'invention, les pênes sont actionnés par des verrous hydrauliques, indépendants du circuit hydraulique de l'inverseur, ou commandés par ledit circuit hydraulique de l'inverseur. Les verrous hydrauliques sont bien connus de l'homme du métier.

L'invention sera mieux comprise et les avantages qu'elle procure apparaitront plus clairement au vu de deux exemples de réalisation et des figures annexées dans lesquelles :

La figure 1 donne une vue de face de l'ensemble turbomoteur et demi-coquilles d'inverseur en position ouverte.

La figure 2 illustre par une vue en coupe longitudinale l'inverseur et le turbomoteur.

La figure 3 détaille par une vue en coupe le dispositif de liaison connu.

La figure 4 est une vue en coupe d'un premier exemple de réalisation de l'invention.

La figure 5 est une vue extérieure de ce même exemple de réalisation de l'invention.

La figure 6 est une vue en coupe de l'exemple préféré de réalisation de l'invention.

La figure 7 est une vue intérieure de ce même exemple de réalisation de l'invention.

La figure 8 est une vue intérieure d'une variante de réalisation de l'invention.

La figure 9 est une vue en coupe de l'exemple de réalisation de l'invention, équipée d'un verrou hydraulique, avec pênes pivotants.

La figure 10 est une variante de réalisation de l'invention équipée d'un verrou hydraulique.

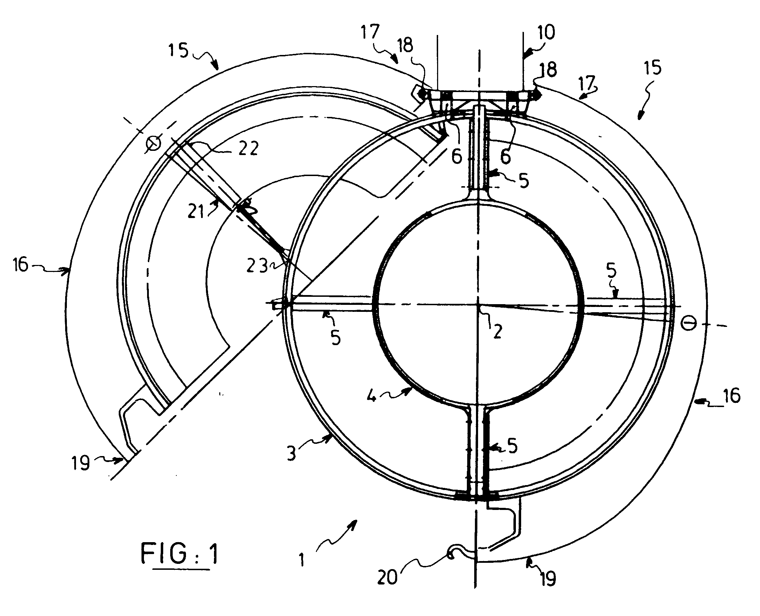

On se reportera en premier lieu à la figure 1. Le turbomoteur 1 d'axe géométrique 2 est du type à double flux et comporte notamment un carter extérieur 3 appelé aussi dans ce cas "carter de soufflante" et un carter intérieur 4 relié au carter extérieur 3 par une pluralité de bras 5, les carters 3 et 4 ayant une forme générale de révolution autour de l'axe géométrique 2. Le turbomoteur 1 est accroché par un jeu de biellettes 6 à un mât 10 descendant de l'aile de l'avion non représentée.

L'inverseur 15 est constitué de deux demi-coquilles 16 dont une extrémité 17 est articulée au mât 10 par un jeu de charnières 18 disposées approximativement parallèlement à l'axe géométrique 2. Les deux demi-coquilles 16 sont verrouillées entre elles en position fermée par leur autre extrémité 19 et les moyens de verrouillage 20. Chaque demi-coquille 16 est maintenue en position ouverte par une contrefiche 21 dont une extrémité 22 est articulée sur la demi-coquille 16 et l'autre extrémité sur le carter extérieur 3.

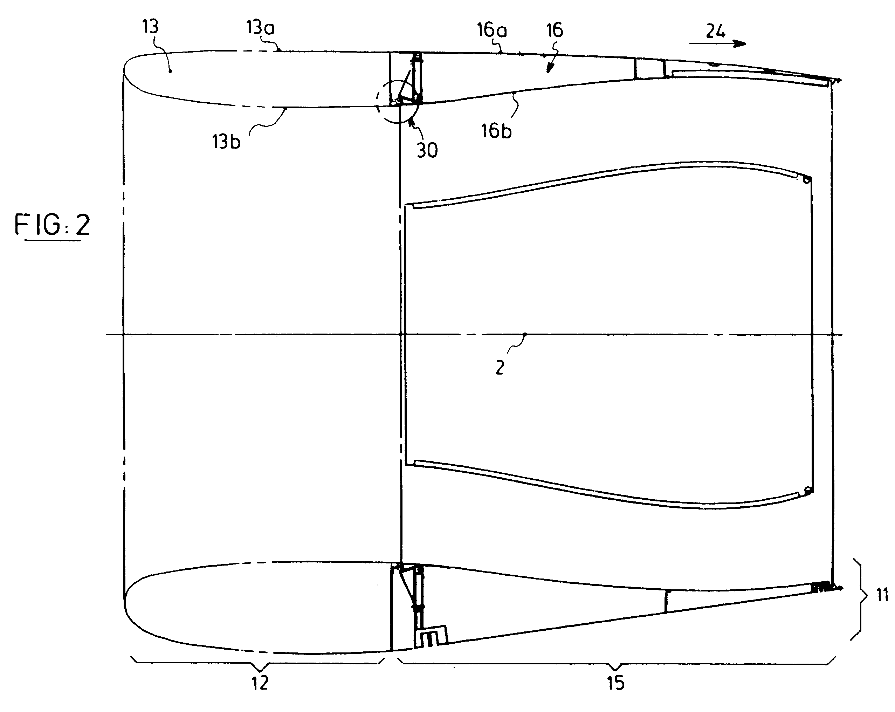

On se reportera maintenant à la figure 2. L'ensemble appelé nacelle 11 comporte à l'arrière l'inverseur de poussée 15 composé des deux demi-coquilles 16 et à l'avant l'entrée d'air 12 composée d'une façon analogue de deux demi-coquilles 13 dont les parois intérieures et extérieures 13a et 13B forment une continuité aérodynamique avec les parois intérieures et extérieures 16a et 16b des demi-coquilles 16.

Du fait que l'inverseur de poussée 15 est soumis en fonctionnement à une importante force de réaction 24 s'exerçant d'avant en arrière, l'ensemble turbomoteur 1 et inverseur 15 comporte aussi des moyens de liaison 30 suivant la direction 24.

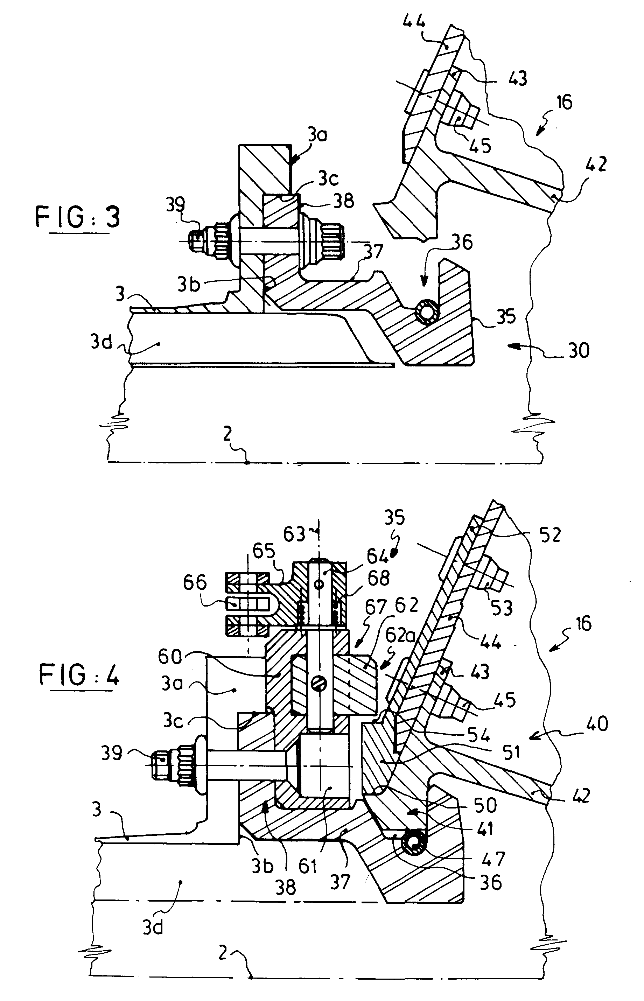

On se reportera maintenant à la figure 3. Le carter extérieur 3 comporte à son extrémité arrière une bride 3a en forme de couronne s'étendant radialement vers l'extérieur et comportant une surface d'appui 3b perpendiculaire à l'axe géométrique 2 et tournée vers l'arrière, cette surface 3b étant limitée radialement vers l'extérieur par un épaulement 3c. La paroi intérieure du carter 3 est tapissée de panneaux acoustiques 3d.

Les moyens de liaison 30 comportent en premier lieu un élément de liaison intérieur et fixe 35 en forme d'anneau et solidaire du carter extérieur 3. L'élément de liaison intérieur 35 comporte lui-même successivement et d'arrière en avant une gorge annulaire 36 tournée radialement vers l'extérieur, une section cylindrique 37 et une bride 38 arrivant en appui sur la surface d'appui 3b avec centrage par l'épaulement 3c, la bride 38 étant maintenue assemblée sur la bride 3a par une pluralité de boulons 39 répartis régulièrement sur toute la circonférence formée par les brides 3a et 38, ce qui permet de transmettre sans concentrations de contraintes excessives au carter 3 les efforts appliqués sur la gorge 36.

Les moyens de liaison 30 comportent aussi des éléments de liaison extérieurs 40 constitués chacun d'un couteau 41 solidaire d'une demi-coquille 16, ledit couteau 41 étant placé en face de la rainure 36, ayant une forme complémentaire de celle de la rainure 36 et venant pénétrer dans cette rainure lorsque les demi-coquilles 16 sont rabattues en position fermée par pivotement autour de leurs charnières référencées 18 sur la figure 1. Un joint torique 45 en élastomère est disposé au fond de la rainure 36, est écrasé par le couteau 41 et permet d'assurer l'étanchéité à l'air entre les demi-coquilles 16 de l'inverseur 15 et le carter extérieur 3.

Le couteau 41 se prolonge latéralement par une bride 42 partiellement représentée et boulonnée à une ferrure de la demi-coquille 16, et se prolonge également vers l'extérieur par une seconde bride 43 liée à une ferrure 44 de la demi-coquille 16 par des boulons 45.

On se reportera maintenant à la figure 4. Le couteau 41 comporte une portée ou surface 50 en arc de cylindre centré sur l'axe géométrique 2, ladite portée 50 étant tournée radialement vers l'extérieur et dégagée du côté de la bride 38. Une cale d'épaisseur 51 est disposée en appui sur la portée 50 et s'étend par une aile 52 le long de la ferrure 44, ladite aile 52 étant liée à la bride 43 et à la ferrure 44 par les boulons 45 et à la ferrure 44 par un second jeu de boulons 53 situés plus à l'extérieur des boulons 45. La cale d'épaisseur 51 comporte aussi une portée ou surface 54 en arc de cylindre centré sur l'axe géométrique 2, ladite portée 54 étant tournée radialement vers l'extérieur et dégagée du côté de la bride 38. La fonction de la cale d'épaisseur 51 est d'offrir une portée 54 équivalente à la portée 51, donc liée au couteau 51, ladite portée 54 étant située radialement plus à l'extérieur de la portée 50.

Le support 60 a la forme d'un secteur d'anneau centré sur l'axe géométrique 2, ce support 60 arrivant en appui radialement sur la section cylindrique 37 de l'élément de liaison fixe 35, ce support 60 arrivant également en appui contre la bride 38 et étant lié à cette bride 38 ainsi qu'à la bride 3a du carter 3 par les boulons 39. Les têtes des vis des boulons 39 sont noyées dans des alvéoles 61 aménagées dans le support 60. Une pluralité de pênes 62 sont montés pivotants sur ce même support 60, le pivotement se faisant selon un axe géométrique de pivotement 63 approximativement radial, c'est à dire concourrant et perpendiculaire à l'axe géométrique 2. A cet effet, les pênes 62 sont goupillés chacun sur un axe d'articulation 64 pivotant dans le support 60 selon l'axe géométrique 63. L'axe d'articulation 64 dépasse du support 60, et une fourchette 65 est elle aussi goupillée sur cet axe d'articulation 64. Cette fourchette 65 est actionnée par des moyens 66 susceptibles de la faire pivoter suivant l'axe géométrique 63, ce mouvement de pivotement étant transmis au pêne 62 par l'axe d'articulation 64. Le pêne 62 est logé dans une alvéole 67 aménagée dans le support 60, cette alvéole étant traversée par l'axe d'articulation 64, le pêne 62 étant positionné en translation avec un jeu limité selon l'axe géométrique 63 par les parois de l'alvéole 67. Le pêne 62 comporte aussi une extrémité 62a arrivant au-dessus de la portée 54 en position fermée, cette extrémité 62a se logeant dans l'alvéole 67 en position ouverte, le pêne 62 pivotant de la position ouverte à la position fermée et réciproquement selon l'axe géométrique 63. Un ressort hélicoïdal 68 est enroulé autour de l'axe d'articulation 64 et comporte deux branches solidaires respectivement du support 60 et de la fourchette 65, ce ressort 68 étant mise en précontrainte de torsion avec un couple suffisant pour amener automatiquement l'extrémité 62a du pêne 62 au-dessus de la portée 54, ce qui empêche le couteau 41 de se dégager de la rainure 36 et par répercussion la demi-coquille 16 de s'ouvrir.

Dans une variante de réalisation, les boulons 39 sont décalés des axes d'articulation 64, le support 60 est moins haut et l'alvéole 67 se confond avec l'alvéole 61, ce qui amène l'extrémité 62a du pêne 62 au-dessus de la portée 50 à une faible distance de celle-ci. La cale d'épaisseur 51 devient en conséquence inutile et le pêne 62 empêchera le dégagement du couteau 41 en agissant directement sur la portée 50.

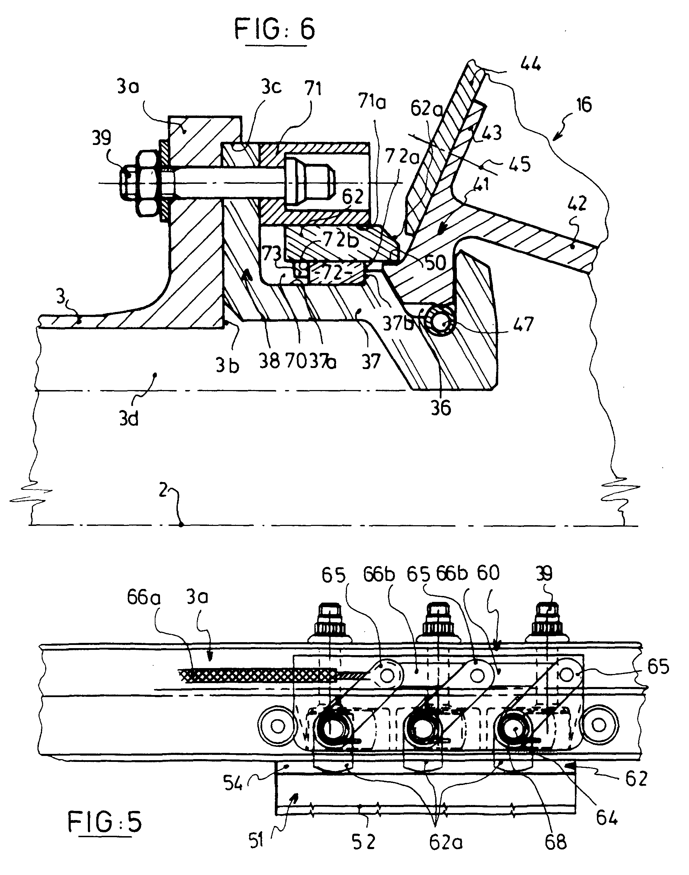

On se reportera maintenant à la figure 5. Dans cet exemple un support 60 comporte trois pênes 62 actionnés chacun par un ressort 68 dans le sens de la fermeture, et dans le sens de l'ouverture par un câble 66a agissant sur une fourchette 65, ce mouvement étant transmis aux autres fourchettes 65 par l'intermédiaire de biellettes 66b, le câble 66a et les biellettes 66b constituant les moyens d'actionnement référencés 66 sur la figure 4.

On se reportera maintenant à la figure 6. Dans un mode de réalisation préféré, le pêne 62 coulisse dans une glissière 70 parallèlement à l'axe géométrique 2, de sorte que l'extrémité 62a du pêne 62 vienne recouvrir en position fermée la portée 50 du couteau 41, et dégage cette même portée 50 en position ouverte. La glissière 70 est formée par la surface extérieure 37a de la section cylindrique 37, et par la surface intérieure 71a d'un guide 71 boulonné avec la bride 38 sur la bride 3a du carter 3. Les surfaces 37a et 71a constituent des portions de surfaces cylindriques avec des génératrices parallèles entre elles et parallèles à l'axe géométrique 2. Une came 72 est disposée entre le pêne 62 et la surface 37a. En conséquence, la came 72 et le pêne 62 coulissent l'un contre l'autre et entre les deux surfaces 37a et 71a avec un jeu limité. La section cylindrique 37 comporte aussi un épaulement 37b situé entre la surface 37a et la rainure 36. La came 72 arrive en appui par l'un de ses flancs 72a contre l'épaulement 37b, alors que son flanc opposé 72b est au contact de pions 73 solidaires du pêne 62 et disposés radialement par rapport à l'axe géométrique 2. On comprend que la came se déplaçant suivant une direction perpendiculaire au plan de la figure 6 pousse en arrière le pêne 62 par l'intermédiaire du pion 73, ce qui a pour effet de découvrir la portée 50 et pour résultat de permettre le dégagement du couteau 41 de la rainure 36.

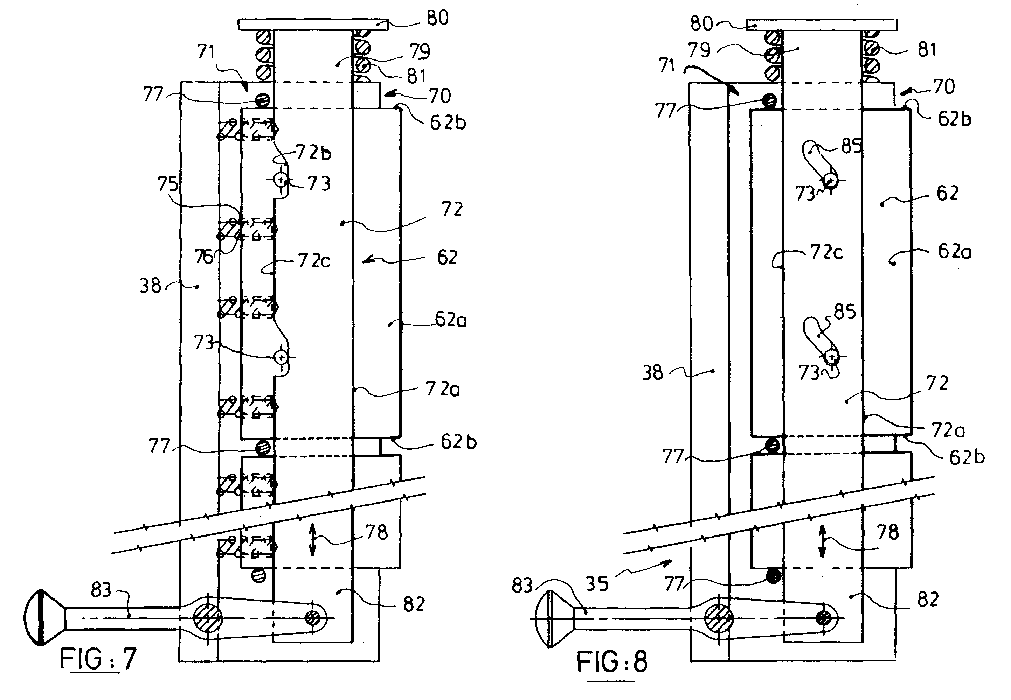

On se reportera maintenant à la figure 7. Une pluralité de tiges cylindriques 75 sont enfoncées dans des alésages dans la bride 38 parallèlement à l'axe géométrique 2 non représenté sur la figure 7 et pénétrant dans des alésages coaxiaux pratiqués dans le pêne 62. Des ressorts hélicoïdaux 76 disposés autour des pions 75 prennent appui contre la bride 35 et repoussent vers la position fermée le pêne 62 dont les deux pions 73 arrivent en appui contre le flanc 72b de la came 72. Le pêne 62 a une forme rectangulaire dont l'extrémité 62a constitue une longueur et dont les deux flancs 62b constituent chacun une largeur. Le pêne 62 coulisse de la position ouverte à la position fermée et réciproquement par ces deux flancs 62b entre deux pions 77 solidaires de la section cylindrique 37 non représentée sur la figure 7, ces deux pions 77 faisant office de glissière.

On se reportera maintenant simultanément aux figures 6 et 7. Les ressorts 76 poussent le pêne 62 vers la position fermée, ce pêne 62 poussant lui-même par les deux pions 73, la came 72 contre l'épaulement 37b. Lorsqu'on déplace la came 72 suivant la direction 78 parallèlement à la bride 38, le pêne 62 retenu par les pions 77 coulisse alors entre la position ouverte et la position fermée suivant une direction perpendiculaire à la direction 78. La distance entre les pions 77 et l'épaulement 37b sera légèrement supérieure à la largeur de la came 72 prise entre son flanc 72a et son flanc opposé 72c afin de compléter le guidage de la came 72 contre l'épaulement 37b et d'empêcher ladite came 72 de s'éloigner accidentellement dudit épaulement 37b, ce qui aurait pour effet d'empêcher l'arrivée complète des pênes 62 en position fermée. La came 72 comporte une extrémité 79 débordant de la glissière 70. A cette extrémité 79 est disposé un épaulement 80 ainsi qu'un ressort 81 en compression entre l'épaulement 80 et le bord de la glissière 70. La fonction du ressort 81 est d'amener la came 72 dans la position correspondant à la position fermée des pênes 62.

A l'autre extrémité 82 de la came 72 est disposée un levier 83 articulé sur ladite extrémité 83 et sur l'élément de liaison intérieur 35, par exemple dans la bride 38. La fonction du levier 83 est de déplacer la came 72 suivant la direction 78 afin d'amener les pênes 62 en position ouverte ou fermée.

Avantageusement, les pênes rectangulaires 72 auront une longueur entre les flancs 62b au moins égale à deux fois la largeur et les pions 73 seront très écartés afin d'assurer la stabilité du positionnement des pênes.

On se reportera maintenant à la figure 8. Dans une variante de réalisation conduisant à une simplification du dispositif, les pions 73 arrivent maintenant chacun dans une rainure oblique 85, ce qui permet à la came 72 de pousser aussi les pênes 62 vers la position fermée en prenant appui par son flanc 72c contre les pions 77.

Avantageusement, une pluralité de pênes 62 séparés par des pions 77 conformément à l'invention seront répartis uniformément le long de la circonférence du carter extérieur référencé 3 sur la figure 6, afin de recouvrir régulièrement la portée 50 du couteau 41 et d'empêcher ainsi le dégagement du couteau 41 de la rainure 36 indépendamment de la rigidité circonférentielle des demi-coquilles de l'inverseur.

On comprend que dans sa forme de réalisation préférée, l'invention est bien adaptée à l'utilisation de pênes 62, de grande longueur entre leurs flancs 62b, ce qui favorise un excellent recouvrement de la portée 50 de chaque couteau 41.

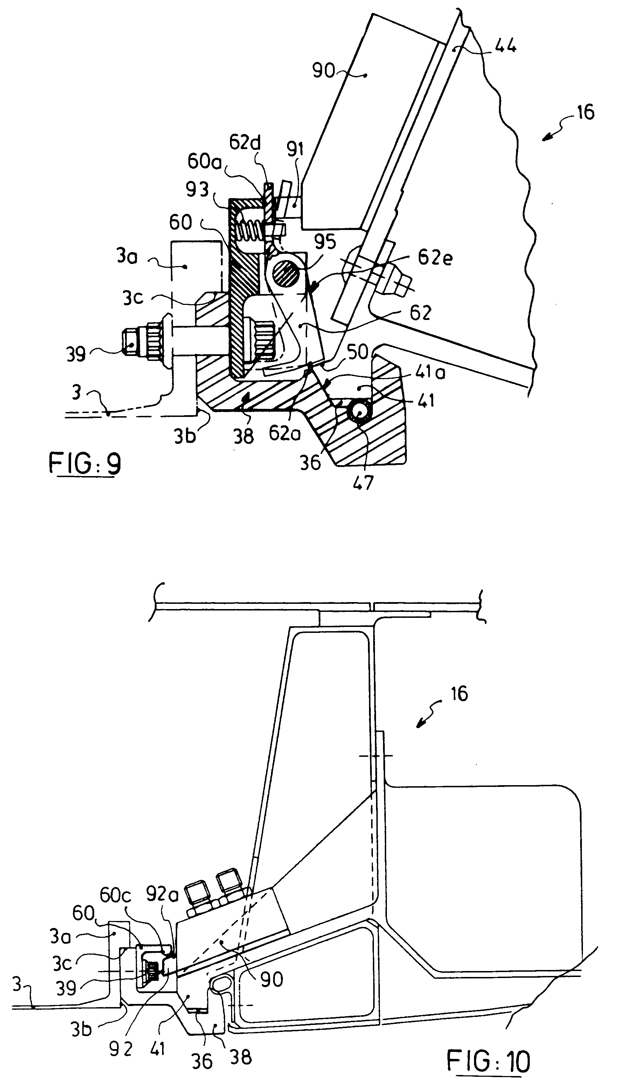

On se reportera maintenant à la figure 9, qui représente un mode de réalisation de l'invention dans lequel le pêne 62 est commandé par un verrou hydraulique 90. L'activation du verrou 90 déplace le piston 91 en position sortie, ce dernier entrainant, par rotation autour d'un axe 95 monté perpendiculairement au plan de coupe de la section, l'extrémité 62d du pêne 62 jusqu'à venir en butée sur la paroi 60a du support 60 amenant ainsi l'extrémité 62a du pêne 62 au-dessus de la portée 50 ce qui empêche le couteau 41 de se dégager de la rainure 36.

Lorsque le verrou 90 est désactivé, son piston 91 est rentré et n'exerce alors aucun effort sur l'extrémité 62a du pêne 62. Un ressort 93 prenant appui d'un côté sur le support 60 et de l'autre côté sur l'extrémité 62a du pêne 62 ramène ce dernier dans une position permettant le désengagement du couteau 41 et par répercussion l'ouverture de l'inverseur.

Il est possible d'envisager une logique différente pour la commande du verrou 90 par exemple dans le cas où le piston 91 serait maintenu en position sortie sous l'action d'un système mécanique, tel un ressort de compression, intégré ou non au verrou 90 et en contact avec l'extrémité 62d, ladite extrémité étant équipée d'une rampe située en vis à vis du piston 91 afin de permettre lors de la fermeture de l'inverseur de positionner le pêne 62 dans une position empêchant au couteau 41 de se dégager de la rainure 36. Dans ce cas, l'activation du verrou 90 aurait pour conséquence de rentrer le piston 91 afin de permettre au pêne 62 sous l'action des ressorts 93 d'occuper une position permettant au couteau 41 de se dégager de la rainure 36.

La logique de commande du verrou 90 peut être associée à celle de l'inverseur ou de l'avion, mais on peut également envisager un système dans lequel la logique de commande du verrou 90 est associée à celle de la commande des vérins de capot qui permettent l'ouverture des deux demi-coquilles 16 de l'inverseur, cette commande étant en général manuelle, et indépendante du système de l'inverseur. Dans ce cas, le pêne 62 est maintenu en position de verrouillage, c'est à dire empêchant le couteau 41 de se dégager de la rainure 36, uniquement sous l'action d'un ou plusieurs ressorts 93 situés en dessous de l'axe 95, l'utilité du verrou 90 étant de positionner le pêne 62 dans une position autorisant l'ouverture des deux demi-coquilles 16 de l'inverseur. Dans ce cas également, lors de la fermeture de l'inverseur la face 41a du couteau 40 glissant sur la face 62e, escamote ce dernier, jusqu'à ce que l'extrémité 62a du pêne 62 se place automatiquement sous l'action des ressorts, au-dessus de la portée 50.

On se reportera maintenant à la figure 10. Dans un autre mode de réalisation de l'invention associé à un verrou hydraulique, selon laquelle le verrou 90 lorsqu'il est activé, commande directement un pêne 92 dont la portée 92a vient se placer sous une portée 60c du support 60 empêchant ainsi le couteau 41 de se dégager de la rainure 36, le verrou 90 étant disposé sur la portée 50, une pluralité de verrous 90 étant ainsi répartis sur les éléments de liaison extérieurs 40 et solidaires à eux.

Il est à noter que les systèmes représentés sur les figures 9 et 10 peuvent être installés simultanément en différents endroits judicieusement choisis par l'homme du métier sur l'inverseur.

On notera également que l'utilisation de verrous de type hydraulique n'est pas une obligation en soit, et que des verrous de type électrique ou pneumatique peut être envisagée.

On comprend aussi que dans les exemples de réalisation qui viennent d'être donnés, les rôles respectifs du couteau 41 et de la rainure 36 peuvent être inversés.

## Revendications

1. Dispositif de liaison d'un inverseur de poussée à un turbomoteur pour aéronef, ledit inverseur (15) étant constitué de deux demi-coquilles (16) disposées autour du turbomoteur (1), lesdites demi-coquilles (16) étant liées axialement au carter extérieur (3) du turbomoteur (1) par interpénétration d'éléments de liaison annulaires intérieurs (35) solidaires du carter (3) et d'éléments de liaison annulaires extérieurs (40) solidaires de chacune des demi-coquilles (16), ladite interpénétration s'effectuant suivant un mouvement sensiblement dans un plan perpendiculaire à l'axe géométrique (2) du turbomoteur (1), **caractérisé en ce que** :
a) Les éléments de liaison extérieurs (40) comportent une portée (50) tournée radialement vers l'extérieur,
b) une pluralité de pênes (62) de verrouillage sont disposés sur le carter extérieur (3), lesdits pênes (62) comportant chacun une position fermée dans laquelle ils arrivent par une extrémité (62a) au-dessus des portées (50), avec un jeu limité, ainsi qu'une position ouverte dans laquelle ils n'arrivent pas au-dessus desdites portées (50) le déplacement de chaque pêne (62) s'effectuant sensiblement dans un plan perpendiculaire à une droite géométrique radiale à l'axe géométrique (2) du turbomoteur, ladite droite géométrique passant par ladite portée (50) à l'endroit où elle est recouvrable par le pêne (62), afin d'empêcher localement les éléments de liaison extérieurs (40) de s'éloigner radialement des éléments de liaison intérieurs (35).

2. Dispositif selon la revendication 1, **caractérisé en ce que** les pênes de verrouillage (62) sont régulièrement répartis avec une densité linéaire suffisante le long de la circonférence du carter extérieur (3) du turbomoteur.

3. Dispositif selon la revendication 1 ou 2, **caractérisé en ce qu'**il comporte des moyens de commande (66) déplaçant ensembles les pênes de verrouillage (62).

4. Dispositif selon l'une quelconque des revendications 1 à 3, **caractérisé en ce qu'**il comporte des ressorts (68,76,81) amenant les pênes (62) en position fermée.

5. Dispositif selon l'une des revendications 1 à 4, **caractérisé en ce que** les pênes (62) sont montés pivotants sur des axes d'articulation (64) radiaux.

6. Dispositif selon la revendication 5, **caractérisé en ce que** les pênes (62) sont poussés en position fermée chacun par un ressort hélicoïdal (68) disposé concentriquement à l'axe d'articulation (64).

7. Dispositif selon la revendication 5 ou 6, **caractérisé en ce que** les pênes comportent un levier dont l'extrémité libre est connectée à un câble lui-même relié à un levier de commande.

8. Dispositif selon l'une quelconque des revendications 1 à 4, **caractérisé en ce que** les pênes (62) sont montés coulissants dans des rainures annulaires (70).

9. Dispositif selon la revendication 8, **caractérisé en ce que** les pênes (62) sont actionnés par des cames linéaires (72) disposées dans les rainures annulaires (70).

10. Dispositif selon la revendication 8 **caractérisé en ce que** les pênes (62) sont actionnés par l'intermédiaire d'un verrou (90) hydraulique, électrique ou pneumatique.

11. Dispositif selon la revendication 10 **caractérisé en ce que** la logique de commande des verrous (90) est associée à la commande des vérins de capots qui permettent l'ouverture des deux demi-coquilles (16).

12. Dispositif de liaison d'un inverseur de poussée à un turbomoteur pour aéronef, ledit inverseur (15) étant constitué de deux demi-coquilles (16) disposées autour du turbomoteur (1), lesdites demi-coquilles (16) étant liées axialement au carter extérieur (3) du turbomoteur (1) par interpénétration d'éléments de liaison annulaires intérieurs (35) solidaires du carter (3) et d'éléments de liaison annulaires extérieurs (40) solidaires de chacune des demi-coquilles (16), ladite interpénétration s'effectuant suivant un mouvement sensiblement dans un plan perpendiculaire à l'axe géométrique (2) du turbomoteur (1), **caractérisé en ce que** :
a) Les éléments de liaison extérieurs (40) comportent une portée (50) tournée radialement vers l'extérieur,
b) Une pluralité de verrous hydrauliques (90), lorsqu'ils sont activés, commandent directement un pêne (92) dont la portée (92a) vient se placer sous une portée (60c) d'un support (60) solidaire du carter (3), lesdits verrous étant sur les éléments de liaison extérieurs (40) et solidaires à eux.

## Claims

1. A device for connecting a thrust reverser to an aircraft turboengine, said reverser (15) consisting of two half-shells (16) disposed around the turboengine (1), said half-shells (16) being connected axially to the outer casing (3) of the engine (1) by the interpenetration of internal annular connecting elements (35) rigidly secured to the casing (3) with external annular connecting elements (40) rigidly secured to each of the half-shells (16), said interpenetration taking place in a movement substantially in a plane perpendicular to the geometric axis (2) of the turboengine (1), **characterised in that**:
(a) the external connecting elements (40) comprise a radially outwardly - facing bearing surface (50), and
(b) a number of locking bolts (62) are disposed on the outer casing (3), each bolt (62) comprising a closed position, in which one end (62a) of the bolt is positioned above a bearing surface (50) with a limited clearance, and an open position, in which it is not positioned above said bearing surface (50), the movement of each bolt (62) taking place substantially in a plane perpendicular to a geometric straight line radial to the geometric axis (2) of the turboengine, said geometric straight line extending through said bearing surface (50) in the region which may be overlapped by the bolt (62) in order to prevent local radial disengagement of the external connecting elements (40) from the internal connecting elements (35).

2. A device according to claim 1, **characterised in that** the locking bolts (62) are distributed regularly with sufficient linear density along the periphery of the external casing (3) of the turboengine.

3. A device according to claim 1 or 2, **characterised in that** it comprises drive means (66) moving the locking bolts (62) together.

4. A device according to any of claims 1 to 3, **characterised in that** it comprises springs (68, 76, 81) urging the bolts (62) into the closed position.

5. A device according to any of claims 1 to 4, **characterised in that** the bolts (62) are pivotably mounted on radial pivot shafts (64).

6. A device according to claim 5, **characterised in that** the bolts (62) are each urged into their closed position by a helical spring (68) disposed concentrically of the pivot shaft (64).

7. A device according to claim 5 or 6, **characterised in that** the bolts comprise a lever whose free end is connected to a cable connected to an actuating lever.

8. A device according to any of claims 1 to 4, **characterised in that** the bolts (62) are slidingly mounted in annular grooves (70).

9. A device according to claim 8, **characterised in that** the bolts (62) are actuated by linear cams (72) disposed in the annular grooves (70).

10. A device according to claim 8, **characterised in that** the bolts (62) are actuated by way of a hydraulic, electric or pneumatic locking mechanism (90).

11. A device according to claim 10, **characterised in that** the actuating logic system of the locking mechanisms (90) is associated with the actuation of cowl rams for opening the two half-shells (16).

12. A device for connecting a thrust reverser to an aircraft turboengine, said reverser (15) consisting of two half-shells (16) disposed around the turboengine (1), said half-shells (16) being connected axially to the outer casing (3) of the turboengine (1) by the interpenetation of internal annular connecting elements (35) rigidly connected to the casing (3) with external annular connecting elements (40) rigidly secured to each of the half-shells (16), said interpenetration taking place in a movement substantially in a plane perpendicular to the geometric axis (2) of the turboengine (1), **characterised in that**:
(a) the external connecting elements (40) comprise a radially outwardly - facing bearing surface (50), and
(b) a number of hydraulic locking mechanisms (90) which, when triggered, directly actuate a bolt (92) whose bearing surface (92a) moves below a bearing surface (60c) of a support (60) rigidly secured to the casing (3), said locking mechamisms being on and rigidly secured to the external connecting elements (40).

## Patentansprüche

1. Verbindungsvorrichung zur Verbindung einer Schubumkehrvorrichtung mit einem Luftfahrzeug-Turbotriebwerk, wobei diese Schubumkehrvorrichtung (15) aus zwei Halbschalen (16) besteht, die um das Turbotriebwerk (1) herum angeordnet sind, wobei diese Halbschalen (16) axial mit dem Außengehäuse (3) des Turbotriebwerks (1) verbunden sind, indem innere ringförmige Verbindungselemente (35), die mit dem Gehäuse (3) fest verbunden sind, und äußere ringförmige Verbindungselemente (40), die mit jeder der Halbschalen (16) fest verbunden sind, ineinander eindringen, wobei dies in einer im wesentlichen senkrecht zu der geometrischen Achse (2) des Turbotriebwerks (1) liegenden Ebene geschieht,
**dadurch gekennzeichnet,**
**dass** :
a) die äußeren ringförmigen Verbindungselemente (40) eine Auflagefläche (50) aufweisen, die radial nach außen gebogen ist,
b) an dem Außengehäuse (3) mehrere Klinken (62) angeordnet sind, die jede eine Schließstellung haben, in der sie mit einem Ende (62a) mit einem begrenzten Spiel über die Auflageflächen (50) reichen, sowie eine geöffnete Stellung haben, in der sie nicht über die Auflageflächen (50) reichen, wobei das Verschieben jeder Klinke (62) im wesentlichen in einer Ebene geschieht, die senkrecht zu einer geometrischen Geraden liegt, die radial zur geometrischen Achse (2) des Turbotriebwerks verläuft, wobei diese geometrische Gerade an einer Stelle durch die Auflagefläche (50) verläuft, wo sie von der Klinke (62) abgedeckt werden kann, um zu verhindern, dass die äußeren Verbindungselemente (40) sich radial von den inneren Verbindungselementen (35) entfernen.

2. Vorrichtung nach Anspruch 1,
**dadurch gekennzeichnet,**
**dass** die Verriegelungsklinken (62) mit einer ausreichenden linearen Dichte regelmäßig über den Umfang des Außengehäuses (3) des Turbotriebwerks verteilt sind.

3. Vorrichtung nach Anspruch 1 oder 2,
**dadurch gekennzeichnet,**
**dass** sie Steuermittel (66) aufweist, die die Verriegelungsklinken (62) gemeinsam verschieben.

4. Vorrichtung nach einem der Ansprüche 1 bis 3,
**dadurch gekennzeichnet,**
**dass** sie Federn (68, 76, 81) aufweist, die die Klinken (62) in die Schließstellung bringen.

5. Vorrichtung nach einem der Ansprüche 1 bis 4,
**dadurch gekennzeichnet,**
**dass** die Klinken (62) schwenkbar an radialen Gelenkachsen (64) sitzen.

6. Vorrichtung nach Anspruch 5,
**dadurch gekennzeichnet,**
**dass** die Klinken (62) jeweils von einer Schraubfeder (68), die konzentrisch an der Gelenkachse (64) angeordnet ist, in die Schließstellung gedrückt werden

7. Vorrichtung nach Anspruch 5 oder 6,
**dadurch gekennzeichnet,**
**dass** die Klinken (62) einen Hebel aufweisen, dessen freies Ende mit einem Kabel verbunden ist, das seinerseits mit einem Steuerhebel verbunden ist.

8. Vorrichtung nach einem der Ansprüche 1 bis 4,
**dadurch gekennzeichnet,**
**dass** die Klinken (62) in ringförmigen Rillen (70) verschiebbar angebracht sind.

9. Vorrichtung nach Anspruch 8,
**dadurch gekennzeichnet,**
**dass** die Klinken (62) durch lineare Nocken (72) betätigt werden, die in den ringförmigen Rillen (70) angeordnet sind.

10. Vorrichtung nach Anspruch 8,
**dadurch gekennzeichnet,**
**dass** die Klinken (62) über einen hydraulischen, elektrischen oder pneumatischen Riegel (90) betätigt werden.

11. Vorrichtung nach Anspruch 10,
**dadurch gekennzeichnet,**
**dass** die Steuerlogik der Riegel (90) mit der Steuerung von Deckelzylindern verbunden ist, die das Öffnen der beiden Halbschalen (16) ermöglichen.

12. Verbindungsvorrichung zur Verbindung einer Schubumkehrvorrichtung mit einem Luftfahrzeug-Turbotriebwerk, wobei diese Schubumkehrvorrichtung (15) aus zwei Halbschalen (16) besteht, die um das Turbotriebwerk (1) herum angeordnet sind, wobei diese Halbschalen (16) axial mit dem Außengehäuse (3) des Turbotriebwerks (1) verbunden sind, indem innere ringförmige Verbindungselemente (35), die mit dem Gehäuse (3) fest verbunden sind, und äußere ringförmige Verbindungselemente (40), die mit jeder der Halbschalen (16) fest verbunden sind, ineinander eindringen, wobei dies in einer im wesentlichen senkrecht zu der geometrischen Achse (2) des Turbotriebwerks (1) liegenden Ebene geschieht,
**dadurch gekennzeichnet,**
**dass :**
a) die äußeren ringförmigen Verbindungselemente (40) eine Auflagefläche (50) aufweisen, die radial nach außen gebogen ist,
b) eine Vielzahl von hydraulischen Riegeln (90), wenn sie aktiviert werden, direkt eine Klinke (92) steuern, deren Auflagefläche (92a) sich unter eine Auflagefläche (60c) einer mit dem Gehäuse (3) fest verbundenen Halterung (60) schiebt, wobei die genannten Riegel sich über den äußeren ringförmigen Verbindungselementen (40) befinden und fest mit diesen verbunden sind.
